(19)

**Europäisches Patentamt**
**European Patent Office**
**Office européen des brevets**

(11) **EP 4 368 942 B1**

(12) **EUROPEAN PATENT SPECIFICATION**

(45) Date of publication and mention
of the grant of the patent:
**21.05.2025 Bulletin 2025/21**

(21) Application number: **23842470.9**

(22) Date of filing: **12.09.2023**

(51) International Patent Classification (IPC):
**G01B 11/00** (2006.01)  **G01B 11/26** (2006.01)
**G01B 11/02** (2006.01)  **G01B 5/02** (2006.01)
**G01C 11/02** (2006.01)  **E02D 29/073** (2006.01)
**G06F 17/11** (2006.01)

(52) Cooperative Patent Classification (CPC):
**E02D 29/073; G01B 11/002;** E02D 15/08

(86) International application number:
**PCT/CN2023/118204**

(87) International publication number:
**WO 2024/017408 (25.01.2024 Gazette 2024/04)**

(54) **UNDERWATER MOUNTING POSITIONING METHOD FOR FINAL JOINT IN IMMERSED TUBE TUNNEL**

POSITIONIERUNGSVERFAHREN FÜR UNTERWASSERMONTAGE FÜR ENDVERBINDUNG IN EINEM UNTERWASSERROHRTUNNEL

PROCÉDÉ DE POSITIONNEMENT DE MONTAGE SOUS-MARIN POUR JOINT FINAL DANS UN TUNNEL TUBE IMMERGÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **20.07.2023 CN 202310892430
20.07.2023 CN 202321922323 U
20.07.2023 CN 202321913304 U
20.07.2023 CN 202321912770 U**

(43) Date of publication of application:
**15.05.2024 Bulletin 2024/20**

(73) Proprietors:
• **CCCC First Harbor Engineering Co., Ltd.
Tianjin 300461 (CN)**
• **No.2 Engineering Company Ltd. of CCCC First Harbor
Engineering Company Ltd
Shandong 266071 (CN)**
• **Guangdong Laboratory of Artificial Intelligence and Digital Economy (SZ)
Shenzhen, Guangdong 518107 (CN)**

(72) Inventors:
• **SUO, Xuhong
Tianjin 300461 (CN)**
• **LI, Yunliang
Shenzhen, Guangdong 518107 (CN)**
• **ZHANG, Naishou
Tianjin 300461 (CN)**
• **YUE, Yuanzheng
Tianjin 300461 (CN)**
• **WANG, Qiang
Tianjin 300461 (CN)**
• **NING, Jinjin
Tianjin 300461 (CN)**
• **LIU, Zhaoquan
Tianjin 300461 (CN)**
• **YU, Bo
Tianjin 300461 (CN)**
• **CHEN, Xiao
Tianjin 300461 (CN)**
• **GUAN, Zexu
Tianjin 300461 (CN)**
• **ZHANG, Chao
Tianjin 300461 (CN)**

EP 4 368 942 B1

(74) Representative: **J A Kemp LLP**
**80 Turnmill Street**
**London EC1M 5QU (GB)**

(56) References cited:
**CN-A- 115 077 487**    **CN-A- 115 077 487**
**CN-A- 116 592 768**    **CN-U- 209 877 872**
**CN-U- 216 815 272**    **CN-U- 216 815 272**
**US-A1- 2022 299 307**

## Description

The present application claims the priority to Chinese patent application No. 202310892430.8 and entitled "Underwater Installation Positioning System and Positioning Method for Closure joint of Immersed tunnel", Chinese patent application No. 202321922323.7 and entitled "Underwater Positioning Apparatus", Chinese patent application No. 202321913304.8 and entitled "Underwater Positioning Object", and Chinese application No. 202321912770.4 and entitled "Underwater Positioning Target", filed to the China Patent Office on July 20th, 2023.

## TECHNICAL FIELD

The present application relates to the technical field of immersed tunnel construction, and in particular to an underwater installation positioning method for a closure joint of an immersed tunnel.

## BACKGROUND ART

During the construction of an immersed tunnel, in order to allow a last tube coupling to be immersed smoothly, a distance longer than the last tube coupling must be left; and when the last tube coupling is immersed and installed, the last tube coupling and a to-be-butted tube coupling are connected through a closure joint. The closure joint is usually disposed inside the last tube coupling, and when the last tube coupling is immersed and installed, the closure joint is pushed outwards to be butted with the to-be-butted tube coupling, so as to achieve through connection of the immersed tunnel; it can be understood that when the closure joint is pushed outwards, a plane displacement and plane rotation will occur under the constraint of the last tube coupling, but tilt or pitch will not occur; therefore, it is necessary to monitor the plane displacement and the rotation angle of the closure joint in real time during a pushing process of the closure joint to obtain real-time posture information of the closure joint, so as to ensure the installation accuracy of the closure joint to meet construction requirements.

At present, the commonly used positioning methods for closure joint installation comprise a measuring tower method, a sonar method, etc. However, with the gradual increase of a working water depth, the positioning accuracy of these conventional underwater positioning methods gradually decreases, and the cost is high, thus it is difficult to better ensure the accuracy and reliability of installing construction of the closure joint.

CN216815272U discloses an underwater installation positioning system for the final joint of an immersed tube tunnel, and the system comprises a cable displacement meter, a camera displacement meter, a serial port server and a data processing terminal.

## SUMMARY

To overcome the shortcomings in related arts, the present application provides an underwater installation positioning method for a closure joint of an immersed tunnel, aiming at accurately monitoring a plane displacement and a rotation angle during the pushing process of the closure joint, achieving high-accuracy positioning and posture determination of the closure joint, and better ensuring the accuracy and reliability of the installing construction of the closure joint.

The invention is set out in the appended set of claims.

Based on the above technical solutions, according to the underwater installation positioning method for the closure joint of the immersed tunnel in the embodiments of the present application, the plane displacement and the rotation angle of the closure joint can be accurately monitored in the pushing process of the closure joint, so as to achieve the high-accuracy positioning and posture determination of the closure joint and better ensure the accuracy and reliability of the installation and construction of the closure joint.

## BRIEF DESCRIPTION OF THE DRAWINGS

The accompanying drawings described herein are to provide a further understanding of the present application and constitute a part of the present application. The illustrative embodiments and their descriptions are provided to explain the present application and do not constitute undue limitations on the present application. In the drawings:

Fig. 1 is a first schematic structural diagram (perspective display) of an underwater positioning apparatus according to an embodiment of the present application;
Fig. 2 is a second schematic structural diagram of the underwater positioning apparatus according to the embodiment of the present application;
Fig. 3 is a top view of the underwater positioning apparatus according to the embodiment of the present application;
Fig. 4 is a schematic diagram of an underwater positioning object according to the embodiment of the present application;

Fig. 5 is a schematic diagram of communication connection according to the embodiment of the present application;

Fig. 6 is a schematic diagram of an initial state of a closure joint coordinate system in an underwater installation positioning method for a closure joint of an immersed tunnel according to an embodiment of the present application;

Fig. 7 is a schematic diagram of a state of the closure joint coordinate system in the underwater installation positioning method for the closure joint of the immersed tunnel during construction according to the embodiment of the present application;

Fig. 8 is a flowchart of the underwater installation positioning method for the closure joint of the immersed tunnel according to the embodiment of the present application;

Fig. 9 is a flowchart of steps in a step S0 of apparatus calibration of the underwater installation positioning method for the closure joint of the immersed tunnel according to the embodiment of the present application;

Fig. 10 is a schematic diagram of a target point layout in the S0 apparatus calibration step of the underwater installation positioning method for the closure joint of the immersed tunnel according to the embodiment of the present application;

Fig. 11 is a logical block diagram for calculating a transformation parameter $X_{gy}$ of a cable displacement meter coordinate system and a transformation parameter $X_{fy}$ of a camera displacement meter coordinate system in step S05 of the underwater installation positioning method for the closure joint of the immersed tunnel according to the embodiment of the present application; and

Fig. 12 is a logical block diagram showing transformations of coordinate systems in step S12 of the underwater installation positioning method for the closure joint of the immersed tunnel according to the embodiment of the present application.

In the drawings:

10. underwater positioning apparatus; 11. instrument box; 111. laser pointer; 12. camera displacement meter; 121. camera; 13. cable displacement meter; 131. pull rod; 132. cable; 133. laser angle measuring device; 134. cable encoder; 1331. laser; 1332. light spot camera; 135. universal joint; 136. winding reel;

20. underwater positioning object; 201. cable measuring point; 202. light source measuring point; 21. main casing; 22. light source; 23. pull ring; 24. back plate; 25. lamp cabin; 26. light-transmitting port;

30. closure joint;

40. last tube coupling;

50. to-be-butted tube coupling;

60. serial port server; 70. data processing terminal.

## DETAILED DESCRIPTION

The technical solutions in the embodiments will be clearly and completely described below with reference to the drawings in the embodiments of the present application. Apparently, the described embodiments are merely some, but not all, of the embodiments of this application. Based on the embodiments of the present application, all other embodiments obtained by those of ordinary skill in the art without involving any inventive effort shall fall into the protection scope of the present application.

It should be noted that, in the description of the present application, directional or positional relationships indicated by terms such as "center", "lateral", "longitudinal", "upper", "lower" , "top", "bottom" , "inner" , "outer" , "left" , "right" , "front" , "rear", "vertical", "horizontal" are based on directional or positional relationships as shown in the accompanying drawings, and are only for the purposes of facilitating and simplifying the descriptions, rather than indicating or implying that the referred apparatus or element has to have a specific direction or be constructed and operated in the specific direction, and therefore, they cannot be regarded as limitations on the present application.

Terms "first" and "second" are for descriptive purposes only, and cannot be understood as indicating or implying the relative importance or implicitly indicating the number of indicated technical features. Therefore, features defined as "first" and "second" may explicitly or implicitly include one or more of the features.

In the description of the present application, it needs to be noted that the terms "mounting", "connected" and "connection" should be understood in a broad sense, for example, "connection" may be fixed connection or detachable connection or connection in an integral whole, may be direct connection or indirect connection through an intermediate medium, and may be inter communication between two elements, unless it may be clearly defined and limited otherwise. For those skilled in the art, the specific meanings of the above terms in present application may be understood according to specific situations. The description of "a plurality of", "sets of" and the like in this application refers to two (sets) or more.

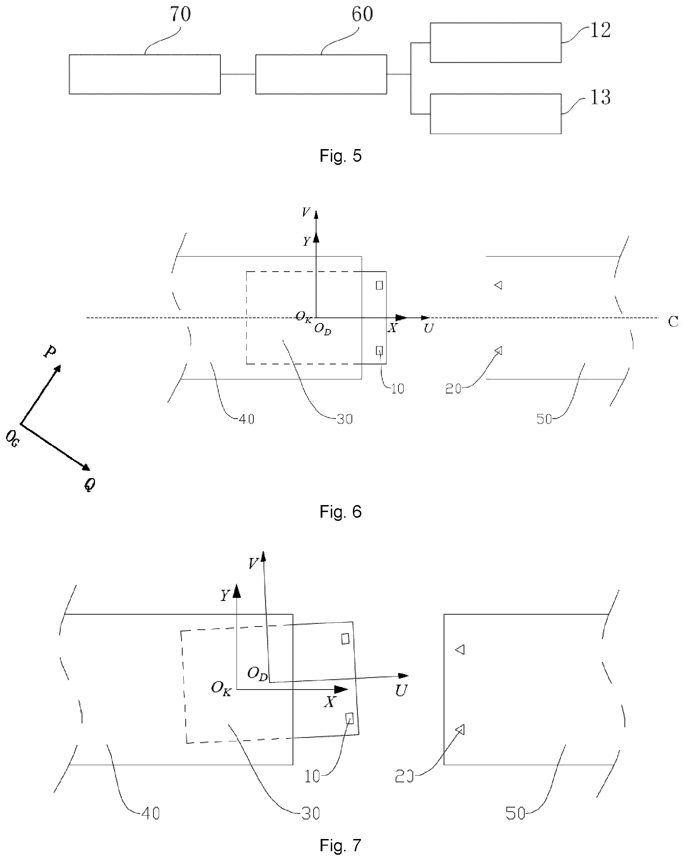

Referring to Fig. 6 and Fig. 7, a closure joint 30 of an immersed tunnel is disposed inside a last tube coupling 40; after the last tube coupling 40 is immersed and installed, the closure joint 30 is pushed outwards to butt with a to-be-butted tube coupling 50, so as to achieve through connection of the immersed tunnel.

Embodiments of an underwater installation positioning system for a closure joint of an immersed tunnel described below are not encompassed by the wording of the claims but are considered as useful for understanding the invention.

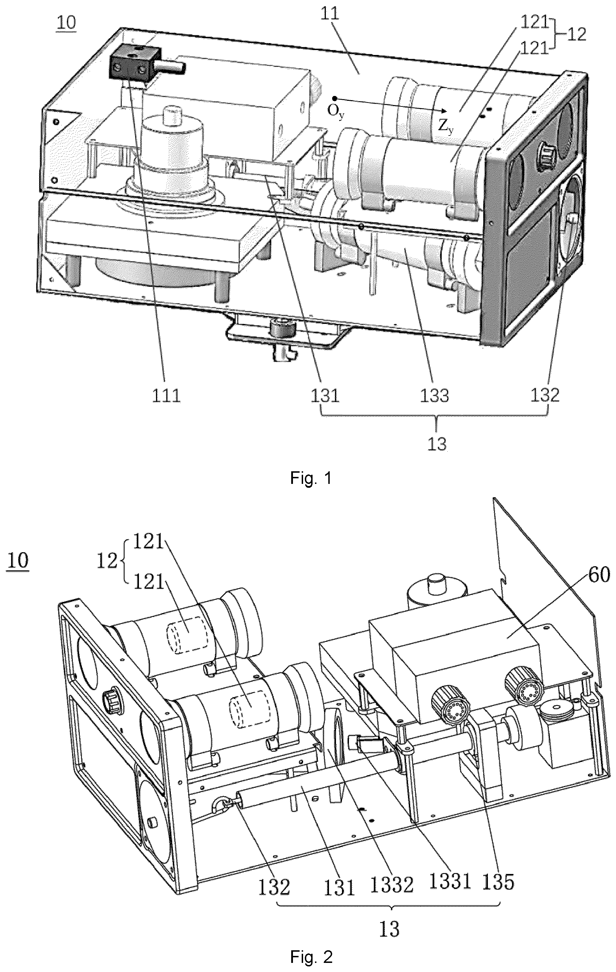

As shown in Figs. 1-5, an embodiment of an underwater installation positioning system for a closure joint of an immersed tunnel, comprising: at least two underwater positioning apparatuses 10, at least two underwater positioning objects 20, a serial port server 60 and a data processing terminal 70; it should be noted that a number of the underwater positioning apparatuses 10 is consistent with a number of the underwater positioning objects 20.

The underwater positioning apparatuses 10 are arranged at one end of the closure joint 30 close to the to-be-butted tube coupling 50. Each underwater positioning apparatus 10 comprises an instrument box 11, and a camera displacement meter 12 and a cable displacement meter 13 that are installed in the instrument box 11. A shooting direction of the camera displacement meter 12 and an outgoing direction of the cable displacement meter 13 both face the to-be-butted tube coupling 50. The underwater positioning objects 20 are arranged at one end of the to-be-butted tube coupling 50 close to the closure joint 30, and are arranged opposite to the underwater positioning apparatuses 10 one by one. It can be understood by those skilled in the art that both the camera displacement meter 12 and the cable displacement meter 13 measure a distance and a direction with respect to the corresponding underwater positioning object 20, so as to position and determine a posture of the closure joint 30. Each underwater positioning object 20 is provided with a cable measuring point 201 and a light source measuring point 202, wherein the cable measuring point 201 is used for measuring in cooperation with the cable displacement meter 13, and the light source measuring point 202 is used for measuring in cooperation with the camera displacement meter 12.

By combining the camera displacement meter 12 and the cable displacement meter 13 in the same instrument box 11, the compact and integrated arrangement of various positioning devices is implemented, so that the underwater positioning apparatus 10 has good apparatus redundancy, the installation difficulty and space occupation of various positioning devices are significantly reduced, the construction efficiency is improved, the integrated arrangement of communication cables of the various positioning devices can be implemented, and the construction cost is reduced; moreover, the various positioning devices can be calibrated uniformly to improve the calibration accuracy of the underwater positioning apparatus 10, and redundant measurement data of different positioning devices can be mutually checked to improve the positioning accuracy, so as to achieve high-accuracy positioning and posture determination of the closure joint 30.

As shown in Fig. 5, the serial port server 60 is in communication connection with both the camera displacement meter 12 and the cable displacement meter 13 to receive and transmit measurement data of the camera displacement meter 12 and the cable displacement meter 13 in real time. The data processing terminal 70 is in communication connection with the serial port server 60 and is used for acquiring the measurement data of the camera displacement meter 12 and the cable displacement meter 13 to calculate a real-time plane displacement and a real-time rotation angle of the closure joint 30, so that real-time position and posture information in a pushing process of the closure joint 30 can be accurately obtained, and the installation accuracy of the closure joint 30 can be ensured to meet construction requirements.

In the above-mentioned exemplary embodiment, by using the underwater positioning apparatuses 10 each comprising the camera displacement meter 12 and the cable displacement meter 13, the plane displacement and the rotation angle of the closure joint 30 can be precisely monitored in the pushing process of the closure joint 30, so as to achieve the high-accuracy positioning and posture determination of the closure joint 30 and better ensure the accuracy and reliability of the installing construction of the closure joint 30.

As shown in Figs. 1 and 2, in some embodiments, the camera displacement meter 12 comprises two cameras 121 disposed side by side to measure a distance and direction between the camera displacement meter 12 and the light source measuring point 202, that is, to determine a relative position relationship between the closure joint 30 and the to-be-butted tube coupling 50 by a camera measuring method. The shooting directions of the two cameras 121 face the light source measuring point 202, and the two cameras 121 form a binocular camera, which is more conducive to the measurement and positioning of the light source measuring point 202.

As shown in Figs. 1-3, the cable displacement meter 13 comprises a rotatable pull rod 131, a retractable cable 132 penetrating through the pull rod 131, a cable encoder 134 for measuring a length of the cable 132, and a laser angle measuring device 133 for measuring a direction of the cable 132, so as to measure the distance and direction between the cable displacement meter 13 and the cable measuring point 201, that is, to determine the relative position relationship between the closure joint 30 and the to-be-butted tube coupling 50 by a cable measuring method.

A rotation center of the pull rod 131 is located in the instrument box 11, and a rotation state of the cable 132 is consistent with that of the pull rod 131. For example, in some embodiments, a rear end of the pull rod 131 is rotatably connected to an interior of the instrument box 11 through a universal joint 135, and a front end of the pull rod 131 is connected to the cable measuring point 201 through the cable 132, and the pull rod 131 rotates around the rear end of the pull rod 131 due to the movement of the cable measuring point 201. It is further explained that one end of the cable 132 is wound around a winding reel 136, and the other end of the cable is to be connected with the cable measuring point 201; the winding reel 136 is used for winding and unwinding the cable 132, and the cable encoder 134 is disposed at the winding reel 136 to measure a rotation angle of the winding reel 136, and then calculate the length of the cable 132.

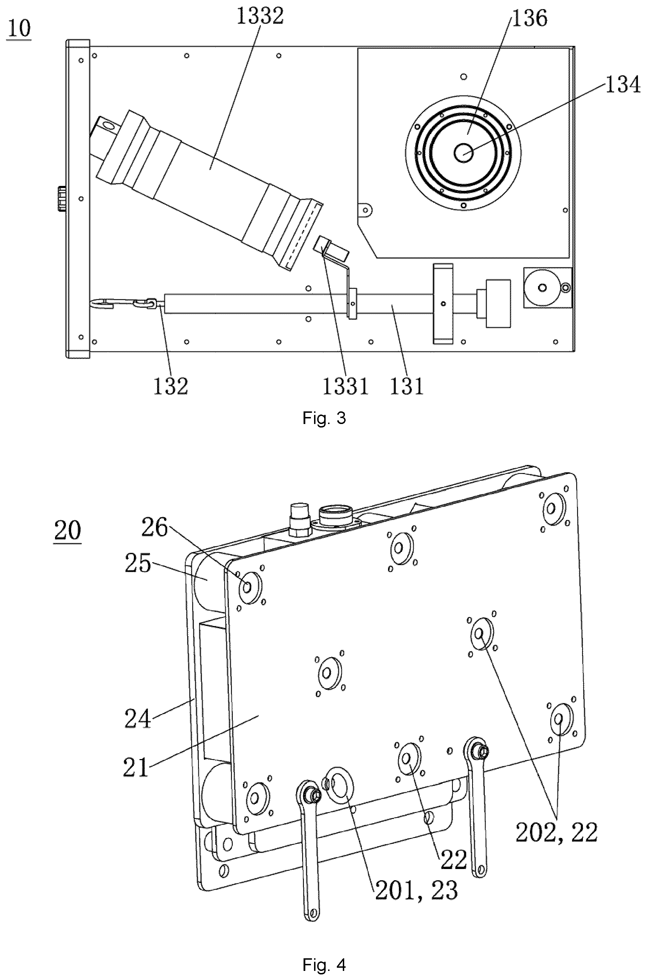

As shown in Figs. 2 and 3, the laser angle measuring device 133 comprises a laser 1331 and a light spot camera 1332; the laser 1331 is installed on the pull rod 131 to rotate synchronously with the pull rod 131, and the laser 1331 is used for emitting laser light outwards; the light spot camera 1332 faces the laser 1331, so that the laser light emitted by the laser 1331 can be projected on the light spot camera 1332 to form a light spot; and the light spot camera 1332 is used for measuring position information of the light spot, thereby calculating a direction of the pull rod 131, that is, the direction of the cable 132, the direction of the pull rod 131 comprises a horizontal angle and a vertical angle. Specifically, according to the movement of the light spot on the light spot camera 1332, a change of the rotation angle of the laser 1331 can be calculated; since the laser 1331 rotates synchronously with the pull rod 131, the change of the rotation angle of the laser 1331 is the change of the rotation angle of the pull rod 131. It is further explained that when the laser angle measuring device 133 of the present embodiment is used for angle measurement, the pull rod 131 is straightened first, that is, to make the horizontal angle and the vertical angle of the pull rod 131 both zero, and a position of the light spot at this moment is calibrated as an initial position; when the pull rod 131 and the laser 1331 rotate synchronously, a real-time position of the light spot changes accordingly; according to a relationship between the real-time position of the light spot and the initial position, the rotation angle of the laser 1331 can be calculated, the rotation angle of the laser 1331 comprises a horizontal rotation angle and a vertical rotation angle; since the horizontal angle and the vertical angle of the pull rod 131 are both zero when calibrating, the horizontal rotation angle of the laser 1331 is equal to the horizontal angle of the pull rod 131, and the vertical rotation angle of the laser 1331 is equal to the vertical angle of the pull rod 131, thereby obtaining the direction of the pull rod 131. According to the exemplary embodiment, through the combined arrangement of the various positioning devices, more redundant measurement data can be obtained in different measurement modes, so that the data quality can be checked and screened, and the accuracy and reliability of the result data can be improved.

As shown in Fig. 2, the serial port server 60 is installed inside the instrument box 11; the serial port server 60 is in communication connection with the cable encoder 134, the laser angle measuring device 133 and the camera 121, so as to output the measurement data of the cable encoder 134, the laser angle measuring device 133 and the camera 121.

As shown in Fig. 4, in some embodiments, each underwater positioning object 20 comprises a main casing 21, a pull ring 23 installed on an outer side of the main casing 21, and a plurality of light sources 22 installed in the main casing 21; a hooking direction of the pull ring 23 faces the corresponding underwater positioning apparatus 10; and light-emitting directions of the plurality of light sources 22 also face the corresponding underwater positioning apparatus 10. The pull ring 23 is used to be connected with the cable displacement meter 13 as the cable measuring point 201 for the cable displacement meter 13. The plurality of light sources 22 constitute light source measuring points 202 for the camera displacement meter 12, and provide a field-of-view for camera measuring of the camera displacement meter 12.

In some embodiments, each underwater positioning object 20 further comprises a back plate 24, the back plate 24 is opposite to the main casing 21 in parallel, and a plurality of lamp cabins 25 are disposed between the back plate 24 and the main casing 21, and each lamp cabin 25 is hermetically connected with the back plate 24 and the main casing 21. A Lamp bead is installed in each lamp cabin 25, light-transmitting ports 26 corresponding to lamp beads one by one are formed in the main casing 21, filter plates are installed at the light-transmitting ports 26, and the lamp beads provide light sources 22 for the underwater positioning object; it can be understood that the filter plates are hermetically connected with the main casing 21 to ensure the tightness of the lamp cabins 25. Each lamp bead emits laser light towards its corresponding light-transmitting port 26 and transmits the laser light outward through the filter plate. Through the arrangement of the plurality of lamp cabins 25 and lamp beads, the underwater positioning object 20 may be used as the light source measuring point 202 to meet the camera measurement requirements of the camera displacement meter 12.

The pull ring 23 is convexly disposed on a surface of the main casing 21 facing away from the back plate 24, and the pull ring 23 is to be connected with the cable 132 of the cable displacement meter 13; through the arrangement of the pull ring 23, the underwater positioning object 20 can be used as the cable measuring point 201 to meet cable measurement requirements of the cable displacement meter 13.

In the above-mentioned embodiment, by integrating the pull ring 23 and the plurality of lamp beads on the main casing 21, compact and integrated arrangement of various underwater positioning points in one underwater positioning object 20 is implemented, so that the underwater positioning object 20 can provide measuring points required for various positioning devices at the same time, thus a workload and difficulty of underwater installation are reduced, a space occupation is also reduced, unified installation and unified calibration are facilitated, and the installation accuracy and positioning accuracy are further improved.

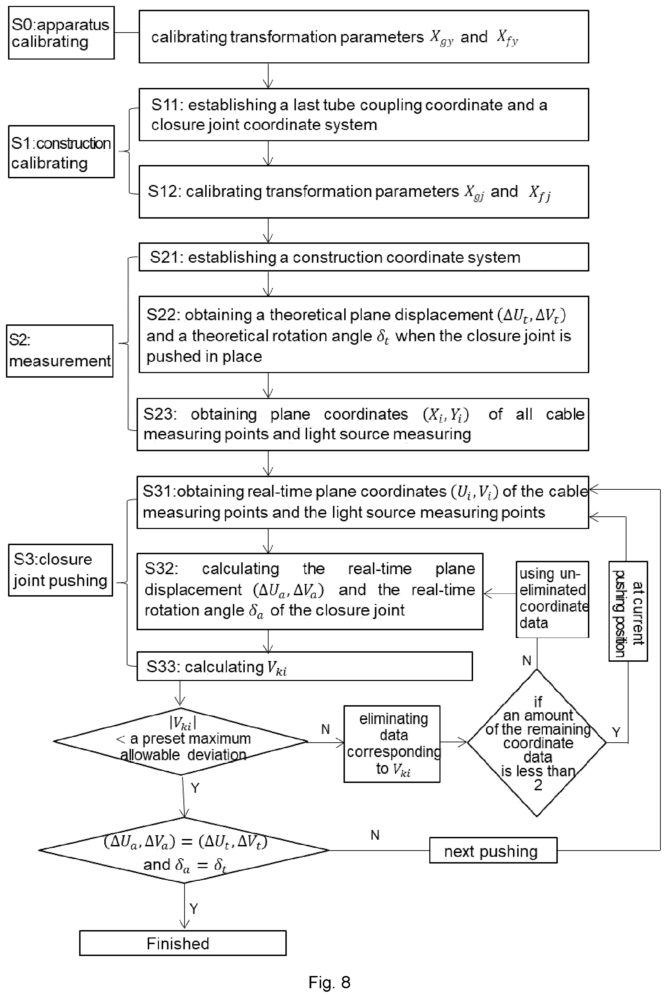

Referring to Figs. 6-8, an embodiment of the present application provides an underwater installation positioning method for a closure joint of an immersed tunnel, which is performed by using the underwater installation positioning system for the closure joint of the immersed tunnel according to any embodiment as described above. The method comprises the following steps:

S1: a step of construction calibrating, specifically comprising:

S11: establishing a last tube coupling coordinate system based on the last tube coupling 40, and marking it as a $O_K$ - $XY$ coordinate system; establishing a closure joint coordinate system based on the closure joint 30, and marking it as a $O_D$ - $UV$ coordinate system; and an initial state of the closure joint coordinate system is the same as the last tube coupling coordinate system, that is, the closure joint coordinate system coincides with the last tube coupling coordinate system before the closure joint 30 is pushed, as shown in Fig. 6;

it can be understood that after the last tube coupling 40 is immersed and installed, the state of the last tube coupling coordinate system will no longer change, but the state of the closure joint coordinate system changes in real time in the pushing process of the closure joint 30, as shown in Fig. 7; therefore, when the pushing process of the closure joint 30 starts, a real-time plane displacement of the closure joint 30 is equal to a real-time plane displacement of the closure joint coordinate system relative to the last tube coupling coordinate system, and a real-time rotation angle of the closure joint 30 is equal to a real-time rotation angle of the closure joint coordinate system relative to the last tube coupling coordinate system;

S12: arranging and installing a plurality of underwater positioning apparatuses 10 at one end of the closure joint 30 close to the to-be-butted tube coupling 50, arranging and installing a plurality of underwater positioning objects 20 at one end of the to-be-butted tube coupling 50 close to the closure joint 30, the underwater positioning apparatuses 10 are disposed opposite to the underwater positioning objects 20 one by one, wherein in some embodiments, four underwater positioning apparatuses 10 and four underwater positioning objects 20 may be adopted, the four underwater positioning apparatuses 10 may be respectively arranged at four corners of an end sealing door of the closure joint 30, the four underwater positioning objects 20 are respectively arranged at four corners of an end sealing door of the to-be-butted tube coupling 50, and it can be understood that the numbers and layout are not limited in the present application, but the numbers of the underwater positioning apparatuses 10 and the underwater positioning objects 20 are at least two; establishing a cable displacement meter coordinate system based on the cable displacement meter 13 and a camera displacement meter coordinate system based on the camera displacement meter 12, calibrating a transformation parameter $X_{gj}$ between the cable displacement meter coordinate system and the closure joint coordinate system, and calibrating a transformation parameter $X_{fj}$ between the camera displacement meter coordinate system and the closure joint coordinate system;

it can be understood that $X_{fj}$ and $X_{gj}$ are constants because a relative position relationship between the underwater positioning apparatus 10 and the closure joint 30 is constant; it is further explained that through the calibration of $X_{gj}$ and $X_{fj}$, measurement data of the cable displacement meter 13 in the cable displacement meter coordinate system and measurement data of the camera displacement meter 12 in the camera displacement meter coordinate system can be converted into measurement data in the closure joint coordinate system, so that the measurement data in different coordinate systems are uniformly converted into the measurement data in the same coordinate system, which facilitates subsequent processing of the measurement data and calculation of real-time posture state of the closure joint 30;

S2: a step of measurement before pushing, which is performed after the last tube coupling 40 is immersed and installed and before the closure joint 30 is pushed, and which specifically comprises:

S21: establishing a construction coordinate system, and marking it as a $O_G$ - $PQ$ coordinate system, as shown in Fig. 6, wherein the construction coordinate system is established according to construction requirements, for example, in some embodiments, an included angle between the construction coordinate system and a design axis C of the tunnel is 56 degrees; and

S22: setting a measuring point (for example, a cable measuring point 201 or a light source measuring point 202) on the to-be-butted tube coupling 50, through a through measurement after the last tube coupling 40 is immersed and installed, plane coordinates of the measuring point in the last tube coupling coordinate system and plane coordinates of the measuring point in the construction coordinate system are obtained to calculate a plane displacement and a rotation angle between the last tube coupling coordinate system and the construction coordinate system, wherein since the initial state of the closure joint coordinate system is the same as that of the last tube coupling coordinate system, a plane displacement and a rotation angle between the initial state of the closure joint coordinate system and the construction coordinate system before pushing are also obtained; as such, in combination with a structural dimension of the closure joint 30, a theoretical plane displacement $(\Delta U_t, \Delta V_t)$ and a theoretical rotation angle $\delta_t$ when the closure joint 30 is pushed in place are obtained. It should be noted that the measuring point may directly adopt the cable measuring point 201 or the light source measuring point 202, or may be set as desired;

S23: through the through measurement after the last tube coupling 40 is immersed and installed, plane coordinates of all the cable measuring points 201 and the light source measuring points 202 in the last tube coupling coordinate system are obtained, numbering all the cable measuring points 201 and the light source measuring points 202 and marking the plane coordinates of the cable measuring points 201 and the light source measuring points 202 in the last tube coupling coordinate system as $(X_i, Y_i)$, where, $i$ = 1 or 2 or ... or $n$; it can be understood that $n \geq 4$; it should be noted that $(X_i, Y_i)$ is a constant in the pushing process of the closure joint 30 since the final joint 40 has already been immersed and mounted;

S3: a step of closure joint pushing, wherein in a pushing process of the closure joint 30, the data processing terminal 70 acquires synchronous measurement data of a plurality of camera displacement meters 12 and a plurality of cable displacement meters 13 in real time through the serial port server 60, to calculate a real-time plane displacement $(\Delta U_a, \Delta V_a)$ and a real-time rotation angle $\delta_a$ of the closure joint 30; when $(\Delta U_a, \Delta V_a) = (\Delta U_t, \Delta V_t)$ and $\delta_a = \delta_t$, the pushing of the closure joint 30 is completed.

In the above-mentioned embodiment, through the step of construction calibrating, the step of measurement before pushing and the step of closure joint pushing, the plane displacement and the rotation angle of the closure joint 30 can be accurately monitored, so as to achieve high-accuracy positioning and posture determination of the closure joint 30 and ensure the accuracy and reliability of pushing installation of the closure joint 30. It should be noted that a specific method of the through measurement in step S22 is the prior art, which can be reasonably realized by those skilled in the art based on the prior art, and will not be described in detail in the present application.

Step S3 comprises the following steps:

S31: in the pushing process of the closure joint 30, using the cable displacement meter 13 to measure coordinates of the cable measuring points 201 in the cable displacement meter coordinate system and, in combination with $X_{gi}$, real-time plane coordinates of the cable measuring points 201 in the closure joint coordinate system are obtained; using the camera displacement meter 12 to measure coordinates of the light source measuring points 202 in the camera displacement meter coordinate system, and in combination with $X_{fi}$, real-time plane coordinates of the light source measuring points 202 in the closure joint coordinate system are obtained; marking the real-time plane coordinates of the cable measuring points 201 and the light source measuring points 202 in the closure joint coordinate system as $(U_i, V_i)$, wherein it can be understood that $(U_i, V_i)$ is a variable which changes with the pushing of the closure joint 30; and

S32: establishing an observation equation of one cable measuring point 201 or one light source measuring point 202, which is expressed as a formula (1);

$$\begin{pmatrix} X_i \\ Y_i \end{pmatrix} + V_{ki} = \begin{pmatrix} 1 & 0 & -V_i \\ 0 & 1 & U_i \end{pmatrix} \begin{pmatrix} \Delta U_a \\ \Delta V_a \\ \delta_a \end{pmatrix} + \begin{pmatrix} U_i \\ V_i \end{pmatrix} \qquad (1);$$

where, in the formula (1), $V_{ki}$ is a measurement correction number of the cable measuring point 201 or the light source measuring point 202; $(\Delta U_a, \Delta V_a)$ is a real-time plane displacement of the closure joint 30, that is, the real-time plane displacement of the closure joint coordinate system relative to the last tube coupling coordinate system; $\delta_a$ is the real-time rotation angle of the closure joint 30, that is, the real-time rotation angle of the closure joint coordinate system relative to the closure joint coordinate system;

$$B = \begin{pmatrix} 1 & 0 & -V_1 \\ 0 & 1 & U_1 \\ & \cdots & \\ 1 & 0 & -V_n \\ 0 & 1 & U_n \end{pmatrix}, \quad X = \begin{pmatrix} \Delta U_a \\ \Delta V_a \\ \delta_a \end{pmatrix}, \quad L = \begin{pmatrix} X_1 \\ Y_1 \\ \cdots \\ X_n \\ Y_n \end{pmatrix} - \begin{pmatrix} U_1 \\ V_1 \\ \cdots \\ U_n \\ V_n \end{pmatrix}, \quad V_k = \begin{pmatrix} V_{k1} \\ \cdots \\ V_{kn} \end{pmatrix}$$

letting , so that observation equations of all the cable measuring points 201 and the light source measuring points 202 are expressed as a formula (2);

$$V_k = B \cdot X - \mathrm{L} \qquad (2);$$

according to the principle of a least square method, a solution of X expressed as a formula (3) is obtained, thereby the real-time plane displacement $(\Delta U_a, \Delta V_a)$ and the real-time rotation angle $\delta_a$ of the closure joint 30 are obtained;

$$X = (B^T B)^{-1} \cdot B^T \cdot L \qquad (3).$$

In the above-mentioned embodiment, the calculation of the real-time plane displacement and the real-time rotation angle in the pushing process of the closure joint 30 is realized, so that the plane displacement and the rotation angle of the closure joint 30 can be monitored in real time, and real-time posture information of the closure joint 30 can be accurately obtained.

In some embodiments, step S3 further comprises: S33: substituting the result of $X$ into the formula (1) to obtain the measurement correction number $V_{ki}$; judging whether an absolute value of $V_{ki}$ exceeds a preset maximum allowable deviation; if the absolute value does not exceed the preset maximum allowable deviation, calculation accuracy check of $X$ at a current pushing position is completed, that is, the calculation result of a current posture of the closure joint 30 is determined to be accurate, and performing the next pushing according to step S3 until the pushing of the closure joint 30 is completed; if the absolute value exceeds the preset maximum allowable deviation, eliminating coordinate data of a measuring point corresponding to this $V_{ki}$, and using coordinate data of other measuring points that have not been eliminated to calculate $X$ again; if the amount of the coordinate data of the measuring points that have not been eliminated is less than 2, re-measuring and re-acquiring the plane coordinates of the cable measuring points 201 and the light source measuring points 202 in the closure joint coordinate system at the current pushing position, so as to re-calculate and re-check $X$. In the present embodiment, results of the real-time plane displacement and the real-time rotation angle of the closure joint 30 are checked, so that the accuracy of the calculation results is ensured and the accuracy and reliability of the installing construction of the closure joint 30 are further ensured.

In some embodiments, in step S22, the plane coordinates of the measuring point in the last tube coupling coordinate system $O_K$ - $XY$ are marked as $(X_0, Y_0)$ and the plane coordinates of the measuring point in the construction coordinate system $O_G$ - $PQ$ are marked as $(P_0, Q_0)$, and the plane displacement $(dX, dY)$ and the rotation angle $\gamma$ between the last tube coupling coordinate system and the construction coordinate system are calculated according to a formula (4); further, on the basis that $(dX, dY)$ and $\gamma$ are obtained, the theoretical plane displacement $(\Delta U_t, \Delta V_t)$ and the theoretical rotation angle $\delta_t$ of the closure joint 30 when the closure joint is pushed in place can be obtained by simply calculation in combination with the specific structural dimension of the closure joint 30;

$$\begin{pmatrix} P_0 \\ Q_0 \end{pmatrix} = \begin{pmatrix} \cos\gamma & -\sin\gamma \\ \sin\gamma & \cos\gamma \end{pmatrix} \begin{pmatrix} X_0 \\ Y_0 \end{pmatrix} + \begin{pmatrix} dX \\ dY \end{pmatrix} \tag{4}.$$

In the above-mentioned embodiment, the calculation of the theoretical plane displacement $(\Delta U_t, \Delta V_t)$ and the theoretical rotation angle $\delta_t$ when the closure joint 30 is pushed in place is realized.

In some embodiments, the underwater installation positioning method for the closure joint of the immersed tunnel further comprises the following steps:

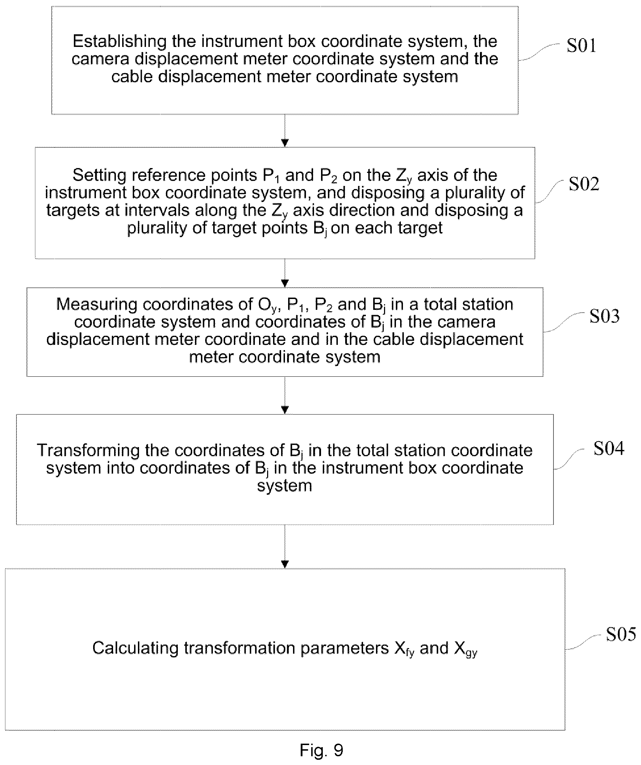

S0: a step of apparatus calibrating, which is performed before the underwater positioning apparatuses 10 are installed at the closure joint 30, calibrating a transformation parameter $X_{gy}$ between the cable displacement meter coordinate system and an instrument box coordinate system, and calibrating a transformation parameter $X_{fy}$ between the camera displacement meter coordinate system and the instrument box coordinate system; specifically, as shown in Fig. 9, the step of apparatus calibrating comprises:

S01: respectively establishing the instrument box coordinate system based on the instrument box 11, the camera displacement meter coordinate system based on the camera displacement meter 12, and the cable displacement meter coordinate system based on the cable displacement meter 13; marking an origin point of the instrument box coordinate system as $O_y$, $O_y$ is located at a center of a top surface of the instrument box 11, and marking a main axis of the instrument box coordinate system as a $Z_y$ axis, the $Z_y$ axis facing the shooting direction of the camera displacement meter 12;

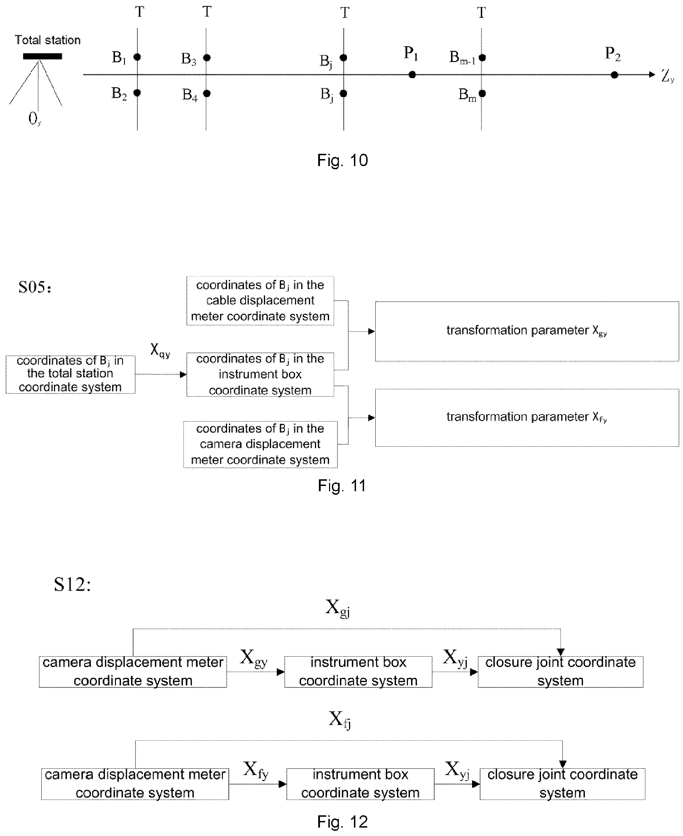

S02: putting the instrument box 11 on the ground and keeping it in a horizontal state; disposing a laser pointer 111 on the top surface of the instrument box 11, and using laser light emitted by the laser pointer 111 to indicate a direction of the $Z_y$ axis; setting two reference points $P_1$ and $P_2$ at an interval on the $Z_y$ axis, and recording their coordinates in the instrument box coordinate system; as shown in Fig. 10, disposing a plurality of targets T at intervals along the $Z_y$ axis and a plurality of target points are provided on each target T, and numbering all the target points as $B_j$, $j$ = 1 or 2 or ... or $m$;

S03: setting up a total station to measure coordinates of $O_y$, $P_1$, $P_2$ and $B_j$ in a total station coordinate system; measuring coordinates of $B_j$ in the camera displacement meter coordinate system by using the camera displacement meter 12; and measuring coordinates of $B_j$ in the cable displacement meter coordinate system by using the cable displacement meter 13;

S04: by using the coordinates of $O_y$, $P_1$, $P_2$ in the total station coordinate system and in the instrument box coordinate system, calculating a transformation parameter $X_{qy}$ of the total station coordinate system when the total station coordinate system is transformed into the instrument box coordinate system; according to the transformation parameter $X_{qy}$ of the total station coordinate system, transforming the coordinates of $B_j$ in the total station coordinate system into coordinates of $B_j$ in the instrument box coordinate system; and

S05: by using the coordinates of $B_j$ in the instrument box coordinate system and the coordinates of $B_j$ in the camera displacement meter coordinate system, establishing a first observation equation of the target point $B_j$ to calculate a transformation parameter $X_{fy}$ of the camera displacement meter coordinate system when the camera displacement meter coordinate system is transformed into the instrument box coordinate system; by using the coordinates of $B_j$ in the instrument box coordinate system and the coordinates of $B_j$ in the cable displacement meter coordinate system, establishing a second observation equation of the target point $B_j$ to calculate a transformation parameter $X_{gy}$ of the cable displacement meter coordinate system when the cable displacement meter coordinate system is transformed into the instrument box coordinate system, wherein a logic block diagram for calculating the transformation parameter $X_{gy}$ of the cable displacement meter coordinate system and the transformation parameter $X_{fy}$ of the camera displacement meter coordinate system is shown in Fig. 11.

Through the above steps, various positioning devices can be calibrated uniformly in a same coordinate system, so that the calibration of the underwater positioning apparatus 10 itself is implemented and the calibration accuracy is improved, and the measurement results of the cable displacement meter 13 and the camera displacement meter 12 are ensured to be more accurate and reliable, thereby achieving high-accuracy positioning and posture determination of the closure joint in pushing process of the closure joint.

As shown in Fig. 12, in step S12, when the underwater positioning apparatuses 10 are installed on the closure joint 30, the transformation parameter $X_{yj}$ between the instrument box coordinate system and the closure joint coordinate system is calibrated first, then $X_{gy}$ and $X_{yj}$ are combined to obtain the transformation parameter $X_{gj}$ between the cable displacement meter coordinate system and the closure joint coordinate system, and $X_{fy}$ and $X_{yj}$ are combined to obtain the transformation parameter $X_{fj}$ between the camera displacement meter coordinate system and the closure joint coordinate system. According to the exemplary embodiment, the calculation of the transformation parameter between the cable displacement meter coordinate system and the closure joint coordinate system, and the calculation of the transformation parameter between the camera displacement meter coordinate system and the closure joint coordinate system are realized.

To sum up, according to the underwater installation positioning method for the closure joint of the immersed tunnel provided by the present application, the plane displacement and the rotation angle of the closure joint 30 can be accurately monitored in the pushing process of the closure joint 30, so as to achieve the high-accuracy positioning and posture determination of the closure joint 30 and better ensure the accuracy and reliability of the installing construction of the closure joint 30.

Finally, it should be noted that the various embodiments in the present description are described in a progressive way, and each embodiment focuses on the differences from other embodiments, the same and similar parts between the embodiments can be referred to each other.

The above embodiments are only intended to illustrate the technical solution of the present application, but are not intended to limit the present application.

**Claims**

1. An underwater installation positioning method for a closure joint of an immersed tunnel, which is performed by an underwater installation positioning system comprising:

   at least two underwater positioning apparatuses (10) arranged at one end of the closure joint (30) close to a to-be-butted tube coupling (50), wherein each underwater positioning apparatus (10) comprises an instrument box (11), and a camera displacement meter (12) and a cable displacement meter (13) that are installed in the instrument box (11), a shooting direction of the camera displacement meter (12) and an outgoing direction of the cable displacement meter (13) both face the to-be-butted tube coupling (50);
   at least two underwater positioning objects (20) arranged at one end of the to-be-butted tube coupling (50) close to the closure joint (30) and arranged opposite to the underwater positioning apparatuses (10) one by one;
   a serial port server (60) being in communication connection with both the camera displacement meter (12) and the cable displacement meter (13) to receive and transmit measurement data of the camera displacement meter (12) and the cable displacement meter (13) in real time; and
   a data processing terminal (70) being in communication connection with the serial port server (60) and used for acquiring measurement data to calculate a real-time plane displacement and a real-time rotation angle of the closure joint (30);
   the method, **characterized in that**, comprises following steps:

S1: a step of construction calibrating, specifically comprises:

S11: establishing a last tube coupling coordinate system based on a last tube coupling (40) and a closure joint coordinate system based on the closure joint (30), and an initial state of the closure joint coordinate system is the same as the last tube coupling coordinate system; and

S12: installing the underwater positioning apparatuses (10) on the closure joint (30) and installing the underwater positioning objects (20) on the to-be-butted tube coupling (50), establishing a cable displacement meter coordinate system based on the cable displacement meter (13) and a camera displacement meter coordinate system based on the camera displacement meter (12), calibrating a transformation parameter $x_{qj}$ between the cable displacement meter coordinate system and the closure joint coordinate system, and calibrating a transformation parameter $X_{fj}$ between the camera displacement meter coordinate system and the closure joint coordinate system;

S2: a step of measurement before pushing, which is performed after the last tube coupling (40) is immersed and installed and before the closure joint (30) is pushed, and which specifically comprises:

S21: establishing a construction coordinate system; and

S22: setting a measuring point, that is, a cable measuring point (201) or a light source measuring point (202), on the to-be-butted tube coupling (40); obtaining plane coordinates of the measuring point in the last tube coupling coordinate system and plane coordinates of the measuring point in the construction coordinate system by a through measurement, so as to calculate a plane displacement and a rotation angle between the last tube coupling coordinate system and the construction coordinate system; and then obtaining a theoretical plane displacement ($\Delta U_t$, $\Delta V_t$) and a theoretical rotation angle $\delta_t$ when the closure joint (30) is pushed in place in combination with a structural dimension of the closure joint (30);

S23, obtaining plane coordinates of all cable measuring points (201) and light source measuring points (202) in the last tube coupling coordinate system by a through measurement, and marking them as ($X_i$, $Y_i$), where $i$ = 1 or 2 or ... or $n$;

S3: a step of closure joint pushing, wherein in a pushing process of the closure joint (30), the data processing terminal (70) uses synchronous measurement data of a plurality of camera displacement meters (12) and a plurality of cable displacement meters (13), to calculate a real-time plane displacement ($\Delta U_a$, $\Delta V_a$) and a real-time rotation angle $\delta_a$ of the closure joint (30); when ($\Delta U_a$, $\Delta V_a$) = ($\Delta U_t$, $\Delta V_t$) and $\delta_a$ = $\delta_t$, the pushing of the closure joint (30) is completed;

step S3 comprises following steps:

S31: in the pushing process of the closure joint (30), using the cable displacement meter (13) to measure the coordinates of the cable measuring points (201) in the cable displacement meter coordinate system, and in combination with $X_{gj}$, real-time plane coordinates of the cable measuring points (201) in the closure joint coordinate system are obtained; using the camera displacement meter (12) to measure coordinates of the light source measuring points (202) in the camera displacement meter coordinate system, and in combination with $X_{fj}$, real-time plane coordinates of the light source measuring points (202) in the closure joint coordinate system are obtained; marking the real-time plane coordinates of the cable measuring points (201) and the light source measuring points (202) in the closure joint coordinate system as ($U_i$, $V_i$); and

S32: establishing an observation equation of one cable measuring point (201) or one light source measuring point (202), which is expressed as a formula (1);

$$\begin{pmatrix} X_i \\ Y_i \end{pmatrix} + V_{ki} = \begin{pmatrix} 1 & 0 & -V_i \\ 0 & 1 & U_i \end{pmatrix} \begin{pmatrix} \Delta U_a \\ \Delta V_a \\ \delta_a \end{pmatrix} + \begin{pmatrix} U_i \\ V_i \end{pmatrix} \qquad (1);$$

where, in the formula (1), $V_{ki}$ is a measurement correction number of the cable measuring point (201) or the light source measuring point (202); ($\Delta U_a$, $\Delta V_a$) is a real-time plane displacement of the closure joint (30), that is, a real-time plane displacement of the closure joint coordinate system relative to the last tube coupling coordinate system; $\delta_a$ is the real-time rotation angle of the closure joint (30), that is, a real-time rotation angle of the closure joint coordinate system relative to the closure joint coordinate system;

letting

$$B = \begin{pmatrix} 1 & 0 & -V_1 \\ 0 & 1 & U_1 \\ & \cdots & \\ 1 & 0 & -V_n \\ 0 & 1 & U_n \end{pmatrix}, \quad X = \begin{pmatrix} \Delta U_a \\ \Delta V_a \\ \delta_a \end{pmatrix}, \quad L = \begin{pmatrix} X_1 \\ Y_1 \\ \cdots \\ X_n \\ Y_n \end{pmatrix} - \begin{pmatrix} U_1 \\ V_1 \\ \cdots \\ U_n \\ V_n \end{pmatrix}, \quad V_k = \begin{pmatrix} V_{k1} \\ \cdots \\ V_{kn} \end{pmatrix}, \text{ so}$$

that observation equations of all the cable measuring points (201) and the light source measuring points (202) are expressed as a formula (2);

$$V_k = B \cdot X - L \qquad (2);$$

according to a principle of a least square method, a solution of $X$ expressed as a formula (3) is obtained, thereby obtaining the real-time plane displacement ($\Delta U_a, \Delta V_a$) and the real-time rotation angle $\delta_a$ of the closure joint (30);

$$X = (B^T B)^{-1} \cdot B^T \cdot L \qquad (3).$$

2. The underwater installation positioning method according to claim 1, **characterized in that**, step S3 further comprises: S33: substituting a result of $X$ into the formula (1) to obtain the measurement correction number $V_{ki}$; judging whether an absolute value of $V_{ki}$ exceeds a preset maximum allowable deviation; if not, calculation accuracy check of $X$ at a current pushing position is completed, and performing a next pushing according to step S3 until the pushing of the closure joint (30) is completed; if yes, eliminating coordinate data of a measuring point corresponding to the $V_{ki}$, and using coordinate data of other measuring points that have not been eliminated to calculate $X$ again; if an amount of the coordinate data of the measuring points that have not been eliminated is less than 2, re-measuring and re-acquiring the plane coordinates of the cable measuring points (201) and the light source measuring points (202) in the closure joint coordinate system at the current pushing position, so as to re-calculate and re-check X.

3. The underwater installation positioning method according to claim 1, **characterized in that**, in step S22, the plane coordinates of the measuring point in the last tube coupling coordinate system are marked as ($X_0, Y_0$) and the plane coordinates of the measuring point in the construction coordinate system are marked as ($P_0, Q_0$), and the plane displacement ($dX, dY$) and the rotation angle $\gamma$ between the last tube coupling coordinate system and the construction coordinate system are calculated according to a formula (4):

$$\begin{pmatrix} P_0 \\ Q_0 \end{pmatrix} = \begin{pmatrix} \cos\gamma & -\sin\gamma \\ \sin\gamma & \cos\gamma \end{pmatrix} \begin{pmatrix} X_0 \\ Y_0 \end{pmatrix} + \begin{pmatrix} dX \\ dY \end{pmatrix} \qquad (4).$$

4. The underwater installation positioning method according to claim 1, **characterized in that**, further comprises following step:

   S0: a step of apparatus calibrating, which is performed before the underwater positioning apparatuses (10) are installed at the closure joint, calibrating a transformation parameter $X_{gy}$ between the cable displacement meter coordinate system and an instrument box coordinate system, and calibrating a transformation parameter $X_{fy}$ between the camera displacement meter coordinate system and the instrument box coordinate system;
   in step S12, when the underwater positioning apparatuses (10) are installed on the closure joint (30), calibrating the transformation parameter $X_{yj}$ between the instrument box coordinate system and the closure joint coordinate system, then combining $X_{gy}$ and $X_{yj}$ to obtain the transformation parameter $X_{gj}$ between the cable displacement meter coordinate system and the closure joint coordinate system, and combining $X_{fy}$ and $X_{yj}$ to obtain the transformation parameter $X_{fj}$ between the camera displacement meter coordinate system and the closure joint coordinate system.

5. The underwater installation positioning method according to claim 4, **characterized in that**, the step S0 of apparatus calibrating comprises following steps:

   S01: respectively establishing the instrument box coordinate system based on the instrument box (11), the camera displacement meter coordinate system based on the camera displacement meter (12) and the cable displacement meter coordinate system based on the cable displacement meter (13); marking an origin point of the instrument box coordinate system as $O_y$, marking a main axis of the instrument box coordinate system as a $Z_y$ axis, the $Z_y$ axis facing the shooting direction of the camera displacement meter (12);

S02: setting two reference points $P_1$ and $P_2$ at an interval on the $Z_y$ axis, and recording coordinates of reference points $P_1$ and $P_2$ in the instrument box coordinate system; disposing a plurality of targets (T) at intervals along the $Z_y$ axis and disposing a plurality of target points on each target (T), and numbering all the target points as $B_j$;

S03: setting up a total station to measure coordinates of $O_y$, $P_1$, $P_2$ and $B_j$ in a total station coordinate system; measuring coordinates of $B_j$ in the camera displacement meter coordinate system by using the camera displacement meter (12); and measuring coordinates of $B_j$ in the cable displacement meter coordinate system by using the cable displacement meter (13);

S04: by using the coordinates of $O_y$, $P_1$, $P_2$ in the total station coordinate system and the coordinates of $O_y$, $P_1$, $P_2$ in the instrument box coordinate system, calculating a transformation parameter $X_{qy}$ of the total station coordinate system when the total station coordinate system is transformed into the instrument box coordinate system; according to the transformation parameter $X_{qy}$ of the total station coordinate system, transforming the coordinates of $B_j$ in the total station coordinate system into coordinates of $B_j$ in the instrument box coordinate system; and

S05: by using the coordinates of $B_j$ in the instrument box coordinate system and the coordinates of $B_j$ in the camera displacement meter coordinate system, calculating a transformation parameter $X_{fy}$ of the camera displacement meter coordinate system when the camera displacement meter coordinate system is transformed into the instrument box coordinate system; by using the coordinates of $B_j$ in the instrument box coordinate system and the coordinates of $B_j$ in the cable displacement meter coordinate system, calculating a transformation parameter $X_{gy}$ of the cable displacement meter coordinate system when the cable displacement meter coordinate system is transformed in to the instrument box coordinate system.

6.  The underwater installation positioning method according to claim 1, **characterized in that**, each underwater positioning object (20) comprises a pull ring (23) and a plurality of light sources (22); the pull ring (23) is used as the cable measuring point (201) for the cable displacement meter (13), a hooking direction of the pull ring (23) faces a corresponding underwater positioning apparatus (10); and the plurality of light sources (22) constitute light source measuring points (202) for the camera displacement meter (12), and light-emitting directions of the plurality of light sources (22) face a corresponding underwater positioning apparatus (10).

7.  The underwater installation positioning method according to claim 6, **characterized in that**, the camera displacement meter (12) comprises two cameras (121) disposed side by side to measure a distance and direction between the camera displacement meter (12) and one of the light source measuring points (202).

8.  The underwater installation positioning method according to claim 6, **characterized in that**, the cable displacement meter (13) comprises a rotatable pull rod (131), a retractable cable (132) penetrating through the pull rod (131), a cable encoder (134) for measuring a length of the cable (132), and a laser angle measuring device (133) for measuring a direction of the cable (132), so as to measure a distance and direction between the cable displacement meter (13) and the cable measuring point (201).

9.  The underwater installation positioning method according to claim 8, **characterized in that**, the laser angle measuring device (133) comprises a laser (1331) and a light spot camera (1332); the laser (1331) is installed on the pull rod (131) to rotate synchronously with the pull rod (131), and the laser (1331) is used for emitting laser light outwards; the light spot camera (1332) faces the laser (1331), so that the laser light emitted by the laser (1331) is projected on the light spot camera (1332) to form a light spot; and the light spot camera (1332) is used for measuring position information of the light spot.

**Patentansprüche**

1.  Unterwasserinstallationspositionierungsverfahren für eine Verschlussverbindung eines eingetauchten Tunnels, das durch ein Unterwasserinstallationspositionierungssystem durchgeführt wird, das umfasst:

    wenigstens zwei Unterwasserpositionierungseinrichtungen (10), die an einem Ende der Verschlussverbindung (30) in der Nähe einer stumpf anzustoßenden Rohrkupplung (50) angeordnet sind, wobei jede Unterwasserpositionierungseinrichtung (10) einen Instrumentenkasten (11) und einen Kameraverschiebungsmesser (12) und einen Kabelverschiebungsmesser (13) umfasst, die in dem Instrumentenkasten (11) installiert sind, wobei eine Aufnahmerichtung des Kameraverschiebungsmessers (12) und eine Ausgangsrichtung des Kabelverschiebungsmessers (13) beide der stumpf anzustoßenden Rohrkupplung (50) zugewandt sind;

wenigstens zwei Unterwasserpositionierungsobjekte (20), die an einem Ende der stumpf anzustoßenden Rohrkupplung (50) in der Nähe der Verschlussverbindung (30) angeordnet sind und den Unterwasserpositionierungseinrichtungen (10) einzeln gegenüberliegend angeordnet sind;

einen Server (60) mit seriellem Anschluss, der in Kommunikationsverbindung sowohl mit dem Kameraverschiebungsmesser (12) als auch mit dem Kabelverschiebungsmesser (13) steht, um Messdaten des Kameraverschiebungsmessers (12) und des Kabelverschiebungsmessers (13) in Echtzeit zu empfangen und zu übertragen; und

ein Datenverarbeitungsendgerät (70), das in Kommunikationsverbindung mit dem Server (60) mit seriellem Anschluss steht und zum Erfassen von Messdaten verwendet wird, um eine Echtzeit-Ebenenverschiebung und einen Echtzeit-Drehwinkel der Verschlussverbindung (30) zu berechnen;

wobei das Verfahren **dadurch gekennzeichnet ist, dass** es folgende Schritte umfasst:

S1: einen Schritt der Konstruktionskalibrierung, der insbesondere umfasst:

S11: Erstellen eines Koordinatensystems für die letzte Rohrkupplung auf Grundlage einer letzten Rohrkupplung (40) und eines Koordinatensystems für die Verschlussverbindung auf Grundlage der Verschlussverbindung (30), und wobei ein Anfangszustand des Koordinatensystems der Verschlussverbindung derselbe ist wie das Koordinatensystem der letzten Rohrkupplung; und

S12: Installieren der Unterwasserpositionierungseinrichtungen (10) an der Verschlussverbindung (30) und Installieren der Unterwasserpositionierungsobjekte (20) an der stumpf anzustoßenden Rohrkupplung (50), Erstellen eines Koordinatensystems für den Kabelverschiebungsmesser auf Grundlage des Kabelverschiebungsmessers (13) und eines Koordinatensystems für den Kameraverschiebungsmesser auf Grundlage des Kameraverschiebungsmessers (12), Kalibrieren eines Transformationsparameters $X_{gj}$ zwischen dem Koordinatensystem für den Kabelverschiebungsmesser und Koordinatensystem für die Verschlussverbindung, und Kalibrieren eines Transformationsparameters $X_{fj}$ zwischen dem Koordinatensystem für den Kameraverschiebungsmesser und dem Koordinatensystem für die Verschlussverbindung;

S2: einen Messschritt vor dem Schieben, der nach dem Eintauchen und der Installation der letzten Rohrkupplung (40) und vor dem Schieben der Verschlussverbindung (30) durchgeführt wird, und der insbesondere umfasst:

S21: Erstellen eines Konstruktionskoordinatensystems; und

S22: Einstellen eines Messpunkts, das heißt eines Kabelmesspunkts (201) oder eines Lichtquellenmesspunkts (202), auf der stumpf anzustoßenden Rohrkupplung (40); Erhalten von Ebenenkoordinaten des Messpunkts in dem Koordinatensystem der letzten Rohrkupplung und von Ebenenkoordinaten des Messpunkts in dem Konstruktionskoordinatensystem durch eine Durchgangsmessung, um eine Ebenenverschiebung und einen Drehwinkel zwischen dem Koordinatensystem für die letzte Rohrkupplung und dem Konstruktionskoordinatensystem zu berechnen; und dann Erhalten einer theoretischen Ebenenverschiebung ($\Delta U_t$, $\Delta V_t$) und eines theoretischen Drehwinkels $\delta_t$, wenn die Verschlussverbindung (30) an ihren Platz geschoben wird, in Kombination mit einer strukturellen Abmessung der Verschlussverbindung (30);

S23, Erhalten der Ebenenkoordinaten aller Kabelmesspunkte (201) und Lichtquellenmesspunkte (202) in dem Koordinatensystem für die letzte Rohrkupplung durch eine Durchgangsmessung und Markieren von ihnen als ($X_i$, $Y_i$), wobei $i$ = 1 oder 2 oder ... oder $n$ ist;

S3: einen Schritt des Schiebens der Verschlussverbindung, wobei in einem Schiebeprozess der Verschlussverbindung (30) das Datenverarbeitungsendgerät (70) synchrone Messdaten einer Mehrzahl von Kameraverschiebungsmessern (12) und einer Mehrzahl von Kabelverschiebungsmessern (13) verwendet, um eine Echtzeit-Ebenenverschiebung ($\Delta U_a$, $\Delta V_a$) und eines Echtzeit-Drehwinkels $\delta_a$ der Verschlussverbindung (30) zu berechnen; wenn ($\Delta U_a$, $\Delta V_a$) = ($\Delta U_t$, $\Delta V_t$) und $\delta_a = \delta_t$ ist das Schieben der Verschlussverbindung (30) abgeschlossen;

wobei Schritt S3 folgende Schritte umfasst:

S31: bei dem Schiebeprozess der Verschlussverbindung (30) Verwenden des Kabelverschiebungsmessers (13), um die Koordinaten der Kabelmesspunkte (201) in dem Koordinatensystem des Kabelverschiebungsmessers zu messen, und in Kombination mit $X_{gj}$ Echtzeit-Ebenenkoordinaten der Kabelmesspunkte (201) in dem Koordinatensystem der Verschlussverbindung erhalten werden; Verwenden des Kameraverschiebungsmessers (12), um die Koordinaten der Lichtquellenmesspunkte (202) in dem Koordinatensystem für den Kameraverschiebungsmesser zu messen, und in Kombination mit $X_{fj}$ werden Echtzeit-Ebenenkoordinaten der Lichtquellenmesspunkte (202) in dem Koordinatensystem für die Verschlussverbindung erhalten; Markieren der Echtzeit-Ebenenkoordinaten der Kabelmesspunkte (201) und der Lichtquellenmesspunkte (202) in dem Koordinatensystem für die Verschlussverbindung als $(U_i, V_i)$; und

S32: Erstellen einer Beobachtungsgleichung für einen Kabelmesspunkt (201) oder einen Lichtquellenmesspunkt (202), die als Formel (1) ausgedrückt wird;

$$\begin{pmatrix} X_i \\ Y_i \end{pmatrix} + V_{ki} = \begin{pmatrix} 1 & 0 & -V_i \\ 0 & 1 & U_i \end{pmatrix} \begin{pmatrix} \Delta U_a \\ \Delta V_a \\ \delta_a \end{pmatrix} + \begin{pmatrix} U_i \\ V_i \end{pmatrix} \tag{1};$$

wobei in der Formel (1) $V_{ki}$ eine Messkorrekturzahl des Kabelmesspunktes (201) oder des Lichtquellenmesspunktes (202) ist; $(\Delta U_a, \Delta V_a)$ eine Echtzeit-Ebenenverschiebung der Verschlussverbindung (30) ist, das heißt eine Echtzeit-Ebenenverschiebung des Koordinatensystems für die Verschlussverbindung relativ zu dem Koordinatensystem der letzten Rohrkupplung; $\delta_a$ der Echtzeit-Drehwinkel der Verschlussverbindung (30) ist, das heißt ein Echtzeit-Drehwinkel des Koordinatensystems für die Verschlussverbindung relativ zu dem Koordinatensystem für die Verschlussverbindung;

$$B = \begin{pmatrix} 1 & 0 & -V_1 \\ 0 & 1 & U_1 \\ & \cdots & \\ 1 & 0 & -V_n \\ 0 & 1 & U_n \end{pmatrix}, \quad X = \begin{pmatrix} \Delta U_a \\ \Delta V_a \\ \delta_a \end{pmatrix}, \quad L = \begin{pmatrix} X_1 \\ Y_1 \\ \cdots \\ X_n \\ Y_n \end{pmatrix} - \begin{pmatrix} U_1 \\ V_1 \\ \cdots \\ U_n \\ V_n \end{pmatrix}, \quad V_k = \begin{pmatrix} V_{k1} \\ \cdots \\ V_{kn} \end{pmatrix},$$

sei , sodass die Beobachtungsgleichungen aller Kabelmesspunkte (201) und der Lichtquellenmesspunkte (202) in einer Formel (2) ausgedrückt werden;

$$V_k = B \cdot X - L \tag{2};$$

wobei gemäß dem Prinzip des Verfahrens der kleinsten Quadrate eine Lösung von X, ausgedrückt als Formel (3), erhalten wird, wodurch die Echtzeit-Ebenenverschiebung $(\Delta U_a, \Delta V_a)$ und der Echtzeit-Drehwinkel $\delta_a$ der Verschlussverbindung (30) erhalten werden;

$$X = (B^T B)^{-1} \cdot B^T \cdot L \tag{3}.$$

2. Unterwasserinstallationspositionierungsverfahren nach Anspruch 1, **dadurch gekennzeichnet, dass** der Schritt S3 ferner umfasst: S33: Einsetzen eines Ergebnisses von X in die Formel (1), um die Messkorrekturzahl $V_{ki}$ zu erhalten; Beurteilen, ob ein absoluter Wert von $V_{ki}$ eine voreingestellte maximal zulässige Abweichung überschreitet; wenn nicht, eine Überprüfung der Berechnungsgenauigkeit von $X$ an einer aktuellen Schiebeposition abgeschlossen wird, und Durchführen eines nächsten Schiebens gemäß Schritt S3, bis das Schieben der Verschlussverbindung (30) abgeschlossen ist; wenn ja, Eliminieren von Koordinatendaten eines Messpunktes, der $V_{ki}$ entspricht, und Verwenden von Koordinatendaten anderer Messpunkte, die nicht eliminiert worden sind, um X erneut zu berechnen; wenn ein Betrag der Koordinatendaten der Messpunkte, die nicht eliminiert worden sind, kleiner als 2 ist, erneutes Messen und erneutes Erfassen der Ebenenkoordinaten der Kabelmesspunkte (201) und der Lichtquellenmesspunkte (202) in dem Koordinatensystem für die Verschlussverbindung an der aktuellen Schiebeposition, um X erneut zu berechnen und erneut zu überprüfen.

3. Unterwasserinstallationspositionierungsverfahren nach Anspruch 1, **dadurch gekennzeichnet, dass** in Schritt S22 die Ebenenkoordinaten des Messpunktes in dem Koordinatensystem der letzten Rohrkupplung als $(X_0, Y_0)$ und die Ebenenkoordinaten des Messpunktes in dem Konstruktionskoordinatensystem als $(P_0, Q_0)$ markiert werden und die Ebenenverschiebung (dX, dY) und der Drehwinkel $\gamma$ zwischen dem Koordinatensystem der letzten Rohrkupplung und dem Konstruktionskoordinatensystem gemäß einer Formel (4) berechnet werden:

$$\begin{pmatrix} P_0 \\ Q_0 \end{pmatrix} = \begin{pmatrix} \cos\gamma & -\sin\gamma \\ \sin\gamma & \cos\gamma \end{pmatrix} \begin{pmatrix} X_0 \\ Y_0 \end{pmatrix} + \begin{pmatrix} dX \\ dY \end{pmatrix} \qquad (4).$$

4. Unterwasserinstallationspositionierungsverfahren nach Anspruch 1, **dadurch gekennzeichnet, dass** es ferner die folgenden Schritte umfasst:

S0: ein Schritt der Einrichtungskalibrierung, der durchgeführt wird, bevor die Unterwasserpositionierungseinrichtung (10) an der Verschlussverbindung installiert werden, des Kalibrierens eines Transformationsparameters $X_{gy}$ zwischen dem Koordinatensystem des Kabelverschiebungsmessers und einem Koordinatensystem für den Instrumentenkasten, und des Kalibrierens eines Transformationsparameter $X_{fy}$ zwischen dem Koordinatensystem des Kameraverschiebungsmessers und dem Koordinatensystem für den Instrumentenkasten;
in Schritt S12, wenn die Unterwasserpositionierungseinrichtungen (10) auf der Verschlussverbindung (30) installiert sind, Kalibrieren des Transformationsparameters $X_{yj}$ zwischen dem Koordinatensystem für den Instrumentenkasten und dem Koordinatensystem für die Verschlussverbindung, dann Kombinieren von $X_{gy}$ und $X_{yj}$, um den Transformationsparameter $X_{gj}$ zwischen dem Koordinatensystem für den Kabelverschiebungsmesser und dem Koordinatensystem für die Verschlussverbindung zu erhalten, und Kombinieren von $X_{fy}$ und $X_{yj}$, um den Transformationsparameter $X_{fj}$ zwischen dem Koordinatensystem für den Kameraverschiebungsmesser und dem Koordinatensystem für die Verschlussverbindung zu erhalten.

5. Unterwasserinstallationspositionierungsverfahren nach Anspruch 4, **dadurch gekennzeichnet, dass** Schritt S0 des Einrichtungskalibrierens die folgenden Schritte umfasst:

S01: jeweiliges Einrichten des Koordinatensystems für den Instrumentenkasten auf Grundlage des Instrumentenkastens (11), des Koordinatensystems für den Kameraverschiebungsmesser auf Grundlage des Kameraverschiebungsmessers (12) und des Koordinatensystems für den Kabelverschiebungsmesser auf Grundlage des Kabelverschiebungsmessers (13); Markieren eines Ursprungspunktes des Koordinatensystems für den Instrumentenkasten als $0_y$, Markieren einer Hauptachse des Koordinatensystems für den Instrumentenkasten als $Z_y$-Achse, wobei die $Z_y$-Achse der Aufnahmerichtung des Kameraverschiebungsmessers (12) zugewandt ist;
S02: Einstellen von zwei Bezugspunkten $P_1$ und $P_2$ in einem Abstand auf der $Z_y$-Achse und Aufzeichnen der Koordinaten der Bezugspunkte $P_1$ und $P_2$ in dem Koordinatensystem des Instrumentenkasten; Anordnen einer Mehrzahl von Zielen (T) in Abständen entlang der $Z_y$-Achse und Anordnen einer Mehrzahl von Zielpunkten auf jedem Ziel (T) und Nummerieren aller Zielpunkte als $B_j$;
S03: Einstellen einer Totalstation zum Messen der Koordinaten von $0_y$, $P_1$, $P_2$ und $B_j$ in einem Koordinatensystem für die Totalstation; Messen der Koordinaten von $B_j$ in dem Koordinatensystem für den Kameraverschiebungsmesser unter Verwendung des Kameraverschiebungsmessers (12); und Messen der Koordinaten von $B_j$ in dem Koordinatensystem des Kabelverschiebungsmessers unter Verwendung des Kabelverschiebungsmessers (13);
S04: durch Verwenden der Koordinaten von $0_y$, $P_1$, $P_2$ in dem Koordinatensystem für die Totalstation und der Koordinaten von $0_y$, $P_1$, $P_2$ in dem Koordinatensystem für den Instrumentenkasten, Berechnen eines Transformationsparameters $X_{qy}$ des Koordinatensystems für die Totalstation, wenn das Koordinatensystem für die Totalstation in das Koordinatensystem für den Instrumentenkasten umgewandelt wird; gemäß dem Transformationsparameter $X_{qy}$ des Koordinatensystems für die Totalstation, Umwandeln der Koordinaten von $B_j$ in dem Koordinatensystem für die Totalstation in Koordinaten von $B_j$ in dem Koordinatensystem für den Instrumentenkasten; und
S05: durch Verwenden der Koordinaten von $B_j$ in dem Koordinatensystem für den Instrumentenkasten und den Koordinaten $B_j$ in dem Koordinatensystem für den Kameraverschiebungsmesser, Berechnen eines Transformationsparameters $X_{fy}$ des Koordinatensystems für den Kameraverschiebungsmesser, wenn das Koordinatensystem für den Kameraverschiebungsmesser in das Koordinatensystem für den Instrumentenkasten umgewandelt wird; durch Verwenden der Koordinaten von $B_j$ in dem Koordinatensystem für den Instrumentenkasten und den Koordinaten von $B_j$ in dem Koordinatensystem für den Kabelverschiebungsmesser, Berechnen eines Transformationsparameters $X_{gy}$ des Koordinatensystems für den Kabelverschiebungsmesser, wenn das Koordinatensystem für den Kabelverschiebungsmesser in das Koordinatensystem für den Instrumentenkasten umgewandelt wird.

6. Unterwasserinstallationspositionierungsverfahren nach Anspruch 1, **dadurch gekennzeichnet, dass** jedes Unterwasserpositionierungsobjekt (20) einen Zugring (23) und eine Mehrzahl von Lichtquellen (22) umfasst; der Zugring (23) als der Kabelmesspunkt (201) für den Kabelverschiebungsmesser (13) verwendet wird, eine Einhakrichtung des Zugrings (23) einer entsprechenden Unterwasserpositionierungseinrichtung (10) zugewandt ist; und die Mehrzahl von Lichtquellen (22) Lichtquellenmesspunkte (202) für den Kameraverschiebungsmesser (12) bilden, und die Lichtemissionsrichtungen der Mehrzahl von Lichtquellen (22) einer entsprechenden Unterwasserpositionierungseinrichtung (10) zugewandt sind.

**7.** Unterwasserinstallationspositionierungsverfahren nach Anspruch 6, **dadurch gekennzeichnet, dass** der Kameraverschiebungsmesser (12) zwei nebeneinander angeordnete Kameras (121) umfasst, um einen Abstand und eine Richtung zwischen dem Kameraverschiebungsmesser (12) und einem der Lichtquellenmesspunkte (202) zu messen.

**8.** Unterwasserinstallationspositionierungsverfahren nach Anspruch 6, **dadurch gekennzeichnet, dass** der Kabelverschiebungsmesser (13) eine drehbare Zugstange (131), ein einziehbares Kabel (132), das die Zugstange (131) durchdringt, einen Kabelcodierer (134) zum Messen einer Länge des Kabels (132) und eine Laserwinkelmessvorrichtung (133) zum Messen einer Richtung des Kabels (132) umfasst, um einen Abstand und eine Richtung zwischen dem Kabelverschiebungsmesser (13) und dem Kabelmesspunkt (201) zu messen.

**9.** Unterwasserinstallationspositionierungsverfahren nach Anspruch 8, **dadurch gekennzeichnet, dass** die Laserwinkelmessvorrichtung (133) einen Laser (1331) und eine Lichtpunktkamera (1332) umfasst; der Laser (1331) an der Zugstange (131) installiert ist, um sich synchron mit der Zugstange (131) zu drehen, und der Laser (1331) zum Emittieren von Laserlicht nach außen verwendet wird; die Lichtpunktkamera (1332) dem Laser (1331) zugewandt ist, sodass das von dem Laser (1331) emittierte Laserlicht auf die Lichtpunktkamera (1332) projiziert wird, um einen Lichtpunkt auszubilden; und die Lichtpunktkamera (1332) zum Messen von Positionsinformationen des Lichtpunkts verwendet wird.

**Revendications**

**1.** Procédé de positionnement pour installation sous-marine relativement à un joint de fermeture d'un tunnel immergé, qui est réalisé par un système de positionnement pour installation sous-marine comprenant :

au moins deux appareils de positionnement sous-marin (10) agencés à une extrémité du joint de fermeture (30) à proximité d'un couplage de tube à abouter (50), chaque appareil de positionnement sous-marin (10) comprenant une boîte d'instruments (11) ainsi qu'un compteur de déplacement de caméra (12) et un compteur de déplacement de câble (13) installés dans la boîte d'instruments (11), la direction de prise de vue du compteur de déplacement de caméra (12) et la direction de sortie du compteur de déplacement de câble (13) étant toutes deux orientées vers le couplage de tube à abouter (50) ;
au moins deux objets de positionnement sous-marin (20) agencés à une extrémité du couplage de tube à abouter (50) à proximité du joint de fermeture (30) et agencés chacun en vis-à-vis d'un appareil de positionnement sous-marin (10) respectif ;
un serveur à port série (60) relié avec faculté de communication à la fois au compteur de déplacement de caméra (12) et au compteur de déplacement de câble (13) pour recevoir et transmettre des données de mesure du compteur de déplacement de caméra (12) et du compteur de déplacement de câble (13) en temps réel ; et
un terminal de traitement de données (70) relié avec faculté de communication au serveur à port série (60) et servant à acquérir des données de mesure afin de calculer un déplacement dans le plan en temps réel et un angle de rotation en temps réel du joint de fermeture (30) ;
le procédé étant **caractérisé en ce qu'**il comprend les étapes suivantes :
S1 : une étape d'étalonnage de construction, qui comprend spécifiquement :

S11 : l'établissement d'un système de coordonnées de dernier couplage de tube en fonction du dernier couplage de tube (40) et d'un système de coordonnées de joint de fermeture en fonction du joint de fermeture (30), où un état initial du système de coordonnées de joint de fermeture est le même que celui du système de coordonnées de dernier couplage de tube ; et
S12 : l'installation des appareils de positionnement sous-marin (10) sur le joint de fermeture (30) et l'installation des objets de positionnement sous-marin (20) sur le couplage de tube à abouter (50), l'établissement d'un système de coordonnées de compteur de déplacement de câble en fonction du compteur de déplacement de câble (13) et d'un système de coordonnées de compteur de déplacement de caméra en fonction du compteur de déplacement de caméra (12), l'étalonnage d'un paramètre de transformation $X_{gj}$ entre le système de coordonnées de compteur de déplacement de câble et le système de coordonnées de joint de fermeture, et l'étalonnage d'un paramètre de transformation $X_{fj}$ entre le système de coordonnées de compteur de déplacement de caméra et le système de coordonnées de joint de fermeture ;

S2 : une étape de mesure avant poussée, effectuée après l'immersion et l'installation du dernier couplage de tube (40) et avant la poussée du joint de fermeture (30), et qui comprend spécifiquement :

S21 : l'établissement d'un système de coordonnées de construction ; et

S22 : la définition d'un point de mesure, c'est-à-dire un point de mesure de câble (201) ou un point de mesure de source de lumière (202), sur le couplage de tube à abouter (40) ; l'obtention des coordonnées dans le plan du point de mesure dans le système de coordonnées de dernier couplage de tube et des coordonnées dans le plan du point de mesure dans le système de coordonnées de construction par une mesure traversante, de manière à calculer un déplacement dans le plan et un angle de rotation entre le système de coordonnées de dernier couplage de tube et le système de coordonnées de construction ; puis l'obtention d'un déplacement dans le plan théorique ($\Delta U_t$, $\Delta V_t$) et d'un angle de rotation théorique $\delta_t$ lorsque le joint de fermeture (30) est poussé en place en combinaison avec une dimension structurelle du joint de fermeture (30) ;

S23 : l'obtention de coordonnées dans le plan de tous les points de mesure de câble (201) et de tous les points de mesure de source de lumière (202) dans le système de coordonnées de dernier couplage de tube par une mesure traversante, et leur marquage sous la forme ($X_i$, $Y_i$), où i = 1 ou 2 ou ... ou n ;

S3 : une étape de poussée du joint de fermeture ; le terminal de traitement de données (70) utilisant, au cours du processus de poussée du joint de fermeture (30), des données de mesure synchrones d'une pluralité de compteurs de déplacement de caméra (12) et d'une pluralité de compteurs de déplacement de câble (13) pour calculer un déplacement dans le plan en temps réel ($\Delta U_a$, $\Delta V_a$) et un angle de rotation en temps réel $\delta_a$ du joint de fermeture (30) ; et lorsque ($\Delta U_a$, $\Delta V_a$) = ($\Delta U_t$, $\Delta V_t$) et $\delta_a = \delta_t$, la poussée du joint de fermeture (30) est terminée ;

l'étape S3 comprenant les étapes suivantes :

S31 : au cours du processus de poussée du joint de fermeture (30), l'utilisation du compteur de déplacement de câble (13) pour mesurer les coordonnées des points de mesure de câble (201) dans le système de coordonnées de compteur de déplacement de câble, et en combinaison avec $X_{gj}$, des coordonnées dans le plan en temps réel des points de mesure de câble (201) dans le système de coordonnées de joint de fermeture sont obtenues ; l'utilisation du compteur de déplacement de caméra (12) pour mesurer des coordonnées des points de mesure de source de lumière (202) dans le système de coordonnées de compteur de déplacement de caméra, et en combinaison avec $X_{fj}$, des coordonnées dans le plan en temps réel des points de mesure de source de lumière (202) dans le système de coordonnées de joint de fermeture sont obtenues ; et le marquage des coordonnées dans le plan en temps réel des points de mesure de câble (201) et des points de mesure de source de lumière (202) dans le système de coordonnées de joint de fermeture sous la forme ($U_i$, $V_i$) ; et

S32 : l'établissement d'une équation d'observation d'un point de mesure de câble (201) ou d'un point de mesure de source de lumière (202), exprimée sous la forme de la formule (1) :

$$\begin{pmatrix} X_i \\ Y_i \end{pmatrix} + V_{ki} = \begin{pmatrix} 1 & 0 & -V_i \\ 0 & 1 & U_i \end{pmatrix} \begin{pmatrix} \Delta U_a \\ \Delta V_a \\ \delta_a \end{pmatrix} + \begin{pmatrix} U_i \\ V_i \end{pmatrix} \qquad (1);$$

dans laquelle formule (1) $V_{ki}$ est un nombre de correction de mesure du point de mesure de câble (201) ou du point de mesure de source de lumière (202) ; ($\Delta U_a$, $\Delta V_a$) est un déplacement dans le plan en temps réel du joint de fermeture (30), c'est-à-dire un déplacement dans le plan en temps réel du système de coordonnées de joint de fermeture par rapport au système de coordonnées de dernier raccord de tube ; $\delta_a$ est l'angle de rotation en temps réel du joint de fermeture (30), c'est-à-dire un angle de rotation en temps réel du système de coordonnées de joint de fermeture par rapport au système de coordonnées de joint de fermeture ;

en                                                                                                                    laissant

$$B = \begin{pmatrix} 1 & 0 & -V_1 \\ 0 & 1 & U_1 \\ & \cdots & \\ 1 & 0 & -V_n \\ 0 & 1 & U_n \end{pmatrix}, \quad X = \begin{pmatrix} \Delta U_a \\ \Delta V_a \\ \delta_a \end{pmatrix}, \quad L = \begin{pmatrix} X_1 \\ Y_1 \\ \cdots \\ X_n \\ Y_n \end{pmatrix} - \begin{pmatrix} U_1 \\ V_1 \\ \cdots \\ U_n \\ V_n \end{pmatrix}, \quad V_k = \begin{pmatrix} V_{k1} \\ \cdots \\ V_{kn} \end{pmatrix}$$

, de façon que les équations d'observation de tous les points de mesure de câble (201) et tous les points de mesure de source de lumière (202) soient exprimées sous la forme de la formule (2) :

$$V_k = B \cdot X - L \qquad (2);$$

selon le principe de la méthode des moindres carrés, on obtient une solution de $X$ exprimée sous la forme de la formule (3), permettant ainsi d'obtenir le déplacement dans le plan en temps réel ($\Delta U_a$, $\Delta V_a$) et l'angle de rotation en temps réel $\delta_a$ du joint de fermeture (30) :

$$X = (B^T B)^{-1} \cdot B^T \cdot L \qquad (3).$$

2. Procédé de positionnement pour installation sous-marine selon la revendication 1, **caractérisé en ce que** l'étape S3 comprend en outre : S33 : la substitution d'un résultat de $X$ dans la formule (1) pour obtenir le nombre de correction de mesure $V_{ki}$ ; la détermination du fait ou non que la valeur absolue de $V_{ki}$ dépasse un écart maximal admissible prédéfini ; dans la négative, la vérification de l'exactitude de calcul de $X$ à la position de poussée actuelle est menée à bien, et la réalisation d'une poussée suivante selon l'étape S3 jusqu'à ce que la poussée du joint de fermeture (30) soit menée à bien ; dans l'affirmative, l'élimination des données de coordonnées d'un point de mesure correspondant au $V_{ki}$, et l'utilisation des données de coordonnées d'autres points de mesure qui n'ont pas été éliminées pour calculer à nouveau $X$ ; si une quantité de données de coordonnées des points de mesure qui n'ont pas été éliminées est inférieure à 2, la remesure et la réacquisition des coordonnées dans le plan des points de mesure de câble (201) et des points de mesure de source de lumière (202) dans le système de coordonnées de joint de fermeture à la position de poussée actuelle, de manière à recalculer et à revérifier $X$.

3. Procédé de positionnement pour installation sous-marine selon la revendication 1, **caractérisé en ce que**, à l'étape S22, les coordonnées dans le plan du point de mesure dans le système de coordonnées de dernier couplage de tube sont marquées sous la forme ($X_0$, $Y_0$) et les coordonnées dans le plan du point de mesure dans le système de coordonnées de construction sont marquées sous la forme ($P_0$, $Q_0$), et le déplacement dans le plan ($dX$, $dY$) et l'angle de rotation $\gamma$ entre le système de coordonnées de dernier couplage de tube et le système de coordonnées de construction sont calculés selon la formule (4) :

$$\begin{pmatrix} P_0 \\ Q_0 \end{pmatrix} = \begin{pmatrix} \cos\gamma & -\sin\gamma \\ \sin\gamma & \cos\gamma \end{pmatrix} \begin{pmatrix} X_0 \\ Y_0 \end{pmatrix} + \begin{pmatrix} dX \\ dY \end{pmatrix} \qquad (4).$$

4. Procédé de positionnement pour installation sous-marine selon la revendication 1, **caractérisé en ce qu'**il comprend en outre l'étape suivante :

S0 : une étape d'étalonnage d'appareil, qui est effectuée avant que les appareils de positionnement sous-marin (10) soient installés au niveau du joint de fermeture, en étalonnant un paramètre de transformation $X_{gy}$ entre le système de coordonnées de compteur de déplacement de câble et un système de coordonnées de boîte d'instruments, et en étalonnant un paramètre de transformation $X_{fy}$ entre le système de coordonnées de compteur de déplacement de caméra et le système de coordonnées de boîte d'instruments ;
à l'étape S12, lorsque les appareils de positionnement sous-marin (10) sont installés sur le joint de fermeture (30), l'étalonnage du paramètre de transformation $X_{yj}$ entre le système de coordonnées de boîte d'instruments et le système de coordonnées de joint de fermeture, puis la combinaison de $X_{gy}$ et $X_{yj}$ pour obtenir le paramètre de transformation $X_{gy}$ entre le système de coordonnées de compteur de déplacement de câble et le système de coordonnées de joint de fermeture, et la combinaison de $X_{fy}$ et $X_{yj}$ pour obtenir le paramètre de transformation $X_{fj}$ entre le système de coordonnées de compteur de déplacement de caméra et le système de coordonnées de joint de fermeture.

**5.** Procédé de positionnement pour installation sous-marine selon la revendication 4, **caractérisé en ce que** l'étape S0 d'étalonnage d'appareil comprend les étapes suivantes :

S01 : l'établissement respectif du système de coordonnées de boîte d'instruments en fonction de la boîte d'instruments (11), du système de coordonnées de compteur de déplacement de caméra en fonction du compteur de déplacement de caméra (12) et du système de coordonnées de compteur de déplacement de câble en fonction du compteur de déplacement de câble (13) ; le marquage d'un point d'origine du système de coordonnées de boîte d'instruments sous la forme $0_y$, le marquage d'un axe principal du système de coordonnées de boîte d'instruments sous la forme de l'axe $Z_y$, l'axe $Z_y$ étant orienté dans la direction de prise de vue du compteur de déplacement de caméra (12) ;

S02 : la définition de deux points de référence $P_1$ et $P_2$ à un intervalle sur l'axe $Z_y$, et l'enregistrement des coordonnées des points de référence $P_1$ et $P_2$ dans le système de coordonnées de boîte d'instruments ; la disposition d'une pluralité de cibles (T) à intervalles le long de l'axe $Z_y$ et la disposition d'une pluralité de points cibles sur chaque cible (T), et la numérotation de tous les points cibles sous la forme $B_j$ ;

S03 : la définition d'une station totale pour mesurer des coordonnées de $0_y$, $P_1$, $P_2$ et $B_j$ dans un système de coordonnées de station totale ; la mesure des coordonnées de $B_j$ dans le système de coordonnées de compteur de déplacement de caméra au moyen du compteur de déplacement de caméra (12) ; et la mesure des coordonnées de $B_j$ dans le système de coordonnées de compteur de déplacement de câble au moyen du compteur de déplacement de câble (13) ;

S04 : au moyen des coordonnées de $0_y$, $P_1$, $P_2$ dans le système de coordonnées de station totale et des coordonnées de $0_y$, $P_1$, $P_2$ dans le système de coordonnées de boîte d'instruments, le calcul d'un paramètre de transformation $X_{qy}$ du système de coordonnées de station totale lorsque le système de coordonnées de station totale est transformé en système de coordonnées de boîte d'instruments ; selon le paramètre de transformation $X_{qy}$ du système de coordonnées de station totale, la transformation des coordonnées de $B_j$ dans le système de coordonnées de station totale en coordonnées de $B_j$ dans le système de coordonnées de boîte d'instruments ; et

S05 : au moyen des coordonnées de $B_j$ dans le système de coordonnées de boîte d'instruments et des coordonnées de $B_j$ dans le système de coordonnées de compteur de déplacement de caméra, le calcul d'un paramètre de transformation $X_{fy}$ du système de coordonnées de compteur de déplacement de caméra lorsque le système de coordonnées de compteur de déplacement de caméra est transformé en système de coordonnées de boîte d'instruments ; au moyen des coordonnées de $B_j$ dans le système de coordonnées de boîte d'instruments et des coordonnées de $B_j$ dans le système de coordonnées de compteur de déplacement de câble, le calcul d'un paramètre de transformation $X_{gy}$ du système de coordonnées de compteur de déplacement de câble lorsque le système de coordonnées de compteur de déplacement de câble est transformé en système de coordonnées de boîte d'instruments.

**6.** Procédé de positionnement pour installation sous-marine selon la revendication 1, **caractérisé en ce que** chaque objet de positionnement sous-marin (20) comprend un anneau de traction (23) et une pluralité de sources de lumière (22) ; l'anneau de traction (23) sert de point de mesure de câble (201) pour le compteur de déplacement de câble (13), la direction d'accrochage de l'anneau de traction (23) est orientée vers un appareil de positionnement sous-marin (10) correspondant ; et la pluralité de sources de lumière (22) constituent des points de mesure (202) de source de lumière pour le compteur de déplacement de caméra (12), et la direction d'émission de lumière de la pluralité de sources de lumière (22) est orientée vers un appareil de positionnement sous-marin (10) correspondant.

**7.** Procédé de positionnement pour installation sous-marine selon la revendication 6, **caractérisé en ce que** le compteur de déplacement de caméra (12) comprend deux caméras (121) disposées côte à côte pour mesurer la distance et la direction entre le compteur de déplacement de caméra (12) et l'un des points de mesure (202) de source de lumière.

**8.** Procédé de positionnement pour installation sous-marine selon la revendication 6, **caractérisé en ce que** le compteur de déplacement de câble (13) comprend une tige de traction rotative (131), un câble rétractable (132) pénétrant à travers la tige de traction (131), un codeur de câble (134) pour mesurer la longueur du câble (132), et un dispositif de mesure d'angle laser (133) pour mesurer la direction du câble (132), de manière à mesurer la distance et la direction entre le compteur de déplacement de câble (13) et le point de mesure de câble (201).

**9.** Procédé de positionnement pour installation sous-marine selon la revendication 8, **caractérisé en ce que** le dispositif de mesure d'angle laser (133) comprend un laser (1331) et une caméra à spot (1332) ; le laser (1331) est installé sur la tige de traction (131) pour tourner de manière synchrone avec la tige de traction (131), et le laser (1331) sert à émettre une lumière laser vers l'extérieur ; la caméra à spot lumineux (1332) est orientée vers le laser (1331) de façon que la lumière laser émise par le laser (1331) est projetée sur la caméra à spot lumineux (1332) pour former un spot lumineux ; et la caméra à spot lumineux (1332) sert à mesurer des informations de position du spot lumineux.

EP 4 368 942 B1

Fig. 1

Fig. 2

Fig. 3

Fig. 4

Fig. 5

Fig. 6

Fig. 7

| S0:apparatus calibrating | calibrating transformation parameters $X_{gy}$ and $X_{fy}$ |

| S1:construction calibrating | S11: establishing a last tube coupling coordinate and a closure joint coordinate system |
| | S12: calibrating transformation parameters $X_{gj}$ and $X_{fj}$ |

| S2: measurement | S21: establishing a construction coordinate system |
| | S22: obtaining a theoretical plane displacement $(\Delta U_t, \Delta V_t)$ and a theoretical rotation angle $\delta_t$ when the closure joint is pushed in place |
| | S23: obtaining plane coordinates $(X_i, Y_i)$ of all cable measuring points and light source measuring |

S31:obtaining real-time plane coordinates $(U_i, V_i)$ of the cable measuring points and the light source measuring points

| S3:closure joint pushing | S32: calculating the real-time plane displacement $(\Delta U_a, \Delta V_a)$ and the real-time rotation angle $\delta_a$ of the closure joint |
| | S33: calculating $V_{ki}$ |

using un-eliminated coordinate data

at current pushing position

$|V_{ki}| <$ a preset maximum allowable deviation

N → eliminating data corresponding to $V_{ki}$

if an amount of the remaining coordinate data is less than 2 — N / Y

$(\Delta U_a, \Delta V_a) = (\Delta U_t, \Delta V_t)$ and $\delta_a = \delta_t$ — N → next pushing

Y

Finished

Fig. 8

Establishing the instrument box coordinate system, the camera displacement meter coordinate system and the cable displacement meter coordinate system — S01

Setting reference points $P_1$ and $P_2$ on the $Z_y$ axis of the instrument box coordinate system, and disposing a plurality of targets at intervals along the $Z_y$ axis direction and disposing a plurality of target points $B_j$ on each target — S02

Measuring coordinates of $O_y$, $P_1$, $P_2$ and $B_j$ in a total station coordinate system and coordinates of $B_j$ in the camera displacement meter coordinate and in the cable displacement meter coordinate system — S03

Transforming the coordinates of $B_j$ in the total station coordinate system into coordinates of $B_j$ in the instrument box coordinate system — S04

Calculating transformation parameters $X_{fy}$ and $X_{gy}$ — S05

Fig. 9

Fig. 10

S05:

Fig. 11

S12:

Fig. 12

**REFERENCES CITED IN THE DESCRIPTION**

**Patent documents cited in the description**

- CN 202310892430
- CN 202321922323
- CN 202321913304
- CN 202321912770
- CN 216815272 U